# EUROPÄISCHE PATENTSCHRIFT

(11) **EP 3 509 883 B1**
(45) Veröffentlichungstag und Bekanntmachung des Hinweises auf die Patenterteilung: **30.06.2021**
(21) Anmeldenummer: 17791979.2
(22) Anmeldetag: 13.10.2017
(51) Int. Cl.: B60J 10/15

(54) **DICHTUNGSPROFIL, VERSCHLIESSBARE ÖFFNUNG**
SEALING PROFILE, CLOSABLE OPENING
PROFIL D'ÉTANCHÉITÉ, OUVERTURE VERROUILLABLE

(30) Priorität: 13.10.2016 DE 102016219904
(43) Veröffentlichungstag der Anmeldung: 17.07.2019
(73) Patentinhaber: vosla GmbH, 08523 Plauen (DE)
(72) Erfinder: WINKLER, Markus, 97941 Tauberbischofsheim (DE)
(74) Vertreter: Isarpatent
(86) Internationale Anmeldenummer: PCT/EP2017/076160
(87) Internationale Veröffentlichungsnummer: WO 2018/069489

(56) Entgegenhaltungen:
- EP-A1- 2 363 324
- DE-A1-102010 019 764
- DE-A1-102015 100 327
- US-A1- 2002 152 686

## Beschreibung

### GEBIET DER ERFINDUNG

Die vorliegende Erfindung betrifft ein Dichtungsprofil sowie eine verschließbare Öffnung. Dokument DE 10 2010 019 765 zeigt ein gattungsgemäßes Dichtungsprofil mit Leuchtmittel.

### TECHNISCHER HINTERGRUND

Dichtungsprofile werden in verschiedenen Bereichen der Technik und des täglichen Lebens eingesetzt. Oftmals handelt es sich dabei um Dichtungen für verschließbare Öffnungen, wie beispielsweise Türdichtungen in Gebäuden oder auch an Fahrzeugen, Möbeln oder Haushaltsgeräten.

Die Funktion einer Dichtung ist in der Regel zwei Bereiche gegeneinander abzudichten, insbesondere um einen Durchtritt von Gasen, Flüssigkeiten und/oder Feuchtigkeit zu verhindern. Die Dichtung ist dabei typischerweise aus einem elastischen Material gefertigt und füllt eine zwischen zwei Grenzflächen der Bereiche vorgesehene Dichtungsnische aus, wobei sie durch ihre Elastizität kraftschlüssig an den Grenzflächen der Bereiche anliegt. Beispielsweise beschreibt das Dokument DE 10 2005 009 794 A1 eine Dichtung für eine Gebäudetür.

Darüber hinaus existieren im Bereich verschließbarer Öffnungen oftmals Beleuchtungs- oder Signaleinrichtungen. Diese können zu unterschiedlichen Zwecken dienen, wie der Ausleuchtung eines Bereichs der Öffnung, beispielsweise an einer geöffneten Fahrzeugtür, der Signalisierung der Richtung oder Existenz der Öffnung, beispielsweise eines Notausgangs, der Signalisierung eines geöffneten Zustands der Öffnung, beispielsweise einer Kühlschranktür oder einer Fahrzeugtür, einer Ambiente-Beleuchtung, beispielsweise einer Fahrzeugtür, oder dergleichen. Als Beispiele derartiger Beleuchtungs- oder Signaleinrichtungen beschreiben das Dokument DE 20 2005 005 862 U1 eine Anzeigetafel zur Signalisierung von Notausgängen und das Dokument DE 10 2009 020 333 A1 eine Ambiente-Beleuchtung für eine Fahrzeugtür.

Die EP 2 363 324 A1 beschreibt eine Zierleiste für ein Kraftfahrzeug, insbesondere eine Dichtleiste für den Fensterschacht einer Fahrzeugtür. Die Zierleiste weist einen Dichtungsabschnitt aus einem elastischen Material auf sowie eine Profilleiste auf. Die Profilleiste umfasst eine bei bestimmungsgemäßer Montage vom Fahrzeug weg gerichteten und von außen sichtbaren Außenfläche, eine Innenfläche sowie zumindest ein Leuchtmittel. Damit die Zierleiste sich von nicht beleuchteten Zierleisten möglichst wenig unterscheidet, ist vorgesehen, dass die Profilleiste zumindest teilweise transluzent oder transparent ausgeführt und das Leuchtmittel auf Seiten der Innenfläche angeordnet ist, um die Profilleiste zu durchleuchten.

### ZUSAMMENFASSUNG DER ERFINDUNG

Vor diesem Hintergrund liegt der vorliegenden Erfindung die Aufgabe zugrunde, eine verbesserte verschließbare Öffnung und ein dafür vorgesehenes verbessertes Dichtungsprofil anzugeben.

Erfindungsgemäß wird diese Aufgabe durch ein Dichtungsprofil mit den Merkmalen des Patentanspruchs 1 und/oder durch eine verschließbare Öffnung mit den Merkmalen des Patentanspruches 10 gelöst.

Demgemäß ist vorgesehen:
- Ein Dichtungsprofil, mit einer Sichtseite, mit einem Dichtungsabschnitt, welcher ein elastisches Material aufweist und zumindest teilweise an der Sichtseite vorgesehen ist, mit einem zumindest teiltransparenten oder teiltransluzenten Abschnitt, der zumindest teilweise an der Sichtseite vorgesehen ist und mit einem Leuchtmittel, welches zumindest teilweise von dem Dichtungsabschnitt umgeben und derart angeordnet ist, dass davon ausgesendetes Licht an der Sichtseite den zumindest teiltransparenten oder teiltransluzenten Abschnitt nach außen passiert, wobei das elastische Material eine zumindest teiltransparente oder teiltransluzente Ausbildung aufweist und wobei der zumindest teiltransparente oder teiltransluzente Abschnitt einteilig mit dem Dichtungsabschnitt ausgebildet ist.
- Eine verschließbare Öffnung, insbesondere Türe, Fenster oder Luke, insbesondere für ein oder in einem Gebäude, Fahrzeug, Möbel oder Gerät oder für eine oder in einer Maschine, mit einem ersten Bereich, der eine Ausnehmung aufweist, mit einem zweiten Bereich, der zum reversiblen Öffnen und Verschließen der Ausnehmung ausgebildet ist, mit einer zwischen dem ersten Bereich und dem zweiten Bereich angeordneten Dichtung, welche ein erfindungsgemäßes Dichtungsprofil aufweist und vorgesehen ist, in einem geschlossenen Zustand der Öffnung eine Dichtwirkung zwischen dem ersten Abschnitt und dem zweiten Abschnitt bereitzustellen und in einem geöffneten Zustand der Öffnung einen Bereich der Ausnehmung, insbesondere situationsangepasst, zu beleuchten oder zu signalisieren.

Die der vorliegenden Erfindung zugrunde liegende Idee besteht darin, eine Dichtung und eine Beleuchtungseinrichtung miteinander zu kombinieren, wozu ein Dichtungsprofil mit einem darin integrierten zumindest teiltransparenten oder teiltransluzenten Abschnitt und mit einem integrierten Leuchtmittel versehen ist. Der zumindest teiltransparenten oder teiltransluzenten Abschnitt ist zumindest teilweise an einer Sichtseite des Dichtprofils vorgesehen, sodass das integrierte Leuchtmittel Licht nach außen in einen Sichtbereich abstrahlen kann.

Auf diese Weise wird vorteilhaft eine separate Beleuchtungseinrichtung obsolet. Ferner wird erfindungsgemäß eine Dichtung um eine Beleuchtungs- und/oder Signalfunktion erweitert.

Die Beleuchtungsfunktion kann beispielsweise zur Raumbeleuchtung oder Ambiente-Beleuchtung eingesetzt werden.

Durch die Signalfunktion kann z.B. einfach symbolisiert werden, ob eine Öffnung, beispielsweise eine Türe, offen oder geschlossen ist. Ferner kann in Gefahrensituationen die Signalwirkung auch die Position der Öffnung angeben z. B bei Rauchentwicklung oder bei Dunkelheit.

Die Lichtfarbe kann entsprechend der jeweiligen Anwendung angepasst werden.

Weiterhin kann bei einer Ausführungsform eine etwaige Abwärme oder ein oder mehrere vorbestimmte Emissionsspektren des Lichts der Leuchtmittel zur Beheizung genutzt werden. So kann beispielsweise ein Einfrieren oder Anfrieren der Dichtung bei Rost verhindert oder ein Auftauen bewirkt werden. In einer besonderen Ausprägung können die Leuchtmittel so beispielsweise auch genutzt werden, um die Oberfläche der Dichtung oder angrenzender Bauteile zu desinfizieren.

Der zumindest teiltransparente oder teiltransluzente Abschnitt ist lichtdurchlässig, insbesondere zumindest teilweise in dem von dem Leuchtmittel ausgesendeten Emissionsspektrum. Vorzugsweise ist er zu einem hohen Anteil, insbesondere vollständig, transparent oder transluzent. Im Fall einer Transparenz scheint eine optische Abbildung des Leuchtmittels durch das Material des Abschnitts. Im Falle einer Transluzenz ist der Abschnitt diffus lichtdurchlässig, d.h. ohne optische Abbildung (ähnlich wie bei einer Milchglasscheibe).

Unter einer zumindest teiltransparenten oder teiltransluzenten Ausbildung des Abschnitts ist zu verstehen, dass der Abschnitt entweder teilweise bzw. abschnittsweise transparent oder transluzent ist oder dass er ganz oder abschnittsweise nur teildurchlässig ist und ein Teil des darauf treffenden Lichts des Leuchtmittels reflektiert oder absorbiert wird. Ferner ist sind auch Kombinationen aus transparenten und transluzenten Abschnitten oder aus abschnittsweiser und/oder teildurchlässiger Transparenz und/oder Transluzenz möglich.

Vorteilhafte Ausgestaltungen und Weiterbildungen ergeben sich aus den weiteren Unteransprüchen sowie aus der Beschreibung unter Bezugnahme auf die Figuren der Zeichnung.

Erfindungsgemäß weist das elastische Material eine zumindest teiltransparente oder teiltransluzente Ausbildung auf. Der zumindest teiltransparente oder teiltransluzente Abschnitt ist in diesem Fall einteilig mit dem Dichtungsabschnitt ausgebildet. Somit ist vorteilhaft die Herstellung erleichtert, da der Dichtungsabschnitt und der teiltransparente oder teiltransluzente Abschnitt in einem gemeinsamen Schritt, insbesondere einem gemeinsamen Extrusionsschritt, aus einem gemeinsamen Material hergestellt werden können. Vorteilhaft ist somit die Herstellung vereinfacht.

Einer nicht-erfindungsgemäßen Ausführungsform zufolge weist das elastische Material zu dem zumindest teiltransparenten oder teiltransluzenten Abschnitt unterschiedliche optische Eigenschaften auf. Insbesondere kann es sich um eine andere Farbe, eine andere bzw. verschiedene Transluzenz oder Transparenz oder dergleichen handeln. Insbesondere kann es sich auch um ein intransparentes oder intransluzentes elastisches Material handeln. Auf diese Weise ist vorteilhaft der Bereich eines Lichtaustritts definiert, sodass eine Beleuchtungs- oder Signalfunktion zielgerichtet bzw. in einem vorbestimmten Austrahlungswinkel ausgeführt werden kann. In der Herstellung kann beispielhaft ein Coextrusionsprozess eingesetzt werden, sodass eine Herstellung dennoch einfach möglich ist.

Gemäß einer Ausführungsform ist ein von der Sichtseite abgewandter Montageabschnitt vorgesehen, welcher ebenfalls mit dem elastischen Material, insbesondere einteilig mit dem Dichtungsabschnitt, gebildet ist. Beispielsweise kann der Montageabschnitt direkt mit extrudiert werden. Auf diese Weise ist eine einfache Montage der Dichtung ermöglicht, ohne dass dazu zusätzlicher Herstellungsaufwand notwendig ist.

Gemäß einer vorteilhaften Ausführungsform ist in dem zumindest teiltransparenten oder teiltransluzenten Abschnitt ein optisches Element vorgesehen, welches zu einer in einer vorbestimmten Weise gerichteten Lichtausstrahlung von dem zumindest teiltransparenten oder teiltransluzenten Abschnitt ausgebildet ist. Insbesondere handelt es sich bei dem optischen Element um eine elastische optische Linse, beispielsweise aus transparentem Silikon, welche die Lichtausstrahlung bestimmt. Vorteilhaft sind somit vielfältige Anwendungen möglich. Beispielsweise kann in einer Beleuchtungsanwendung eine sehr zielgerichtete Beleuchtung vorgesehen sein, während in einer Signalanwendung eine möglichst große Streuung vorgesehen sein kann.

Gemäß Anspruch 1 ist eine Vielzahl entlang des Dichtungsprofils angeordneter Leuchtmittel vorgesehen. Insbesondere handelt es sich um eine Vielzahl von auf einem sich in Profilrichtung erstreckenden flexiblen Substrat aufgebrachten Halbleiterleuchtmitteln. Durch seine Flexibilität ist das Substrat vorteilhaft plastisch oder elastisch verformbar und kann so dem Verlauf des Dichtungsprofils stets folgen. Bei den Halbleiterleuchtmitteln kann es sich insbesondere um LED oder OLED handeln, welche entweder als eingehäuste Bauteile bzw. SMD oder, beispielsweise als LED Chip, direkt auf das flexible Substrat aufgebracht werden. Insbesondere erstreckt sich die Anordnung der Leuchtmittel bzw. das flexible Substrat über die gesamte oder nahezu gesamte Profillänge des Dichtungsprofils. Auf diese Weise ist eine große leuchtende bzw. beleuchtete oder beleuchtbare Fläche bereitgestellt.

Gemäß Anspruch 1 sieht eine Profilform des Dichtungsprofils einen Hohlraum oder Zwischenraum vor, welcher ein Einfedern des Dichtungsabschnittes erlaubt. Die Leuchtmittel sind in dem Hohlraum oder Zwischenraum angeordnet. Auf diese Weise wird der durch den Hohlraum gebildete Raum synergetisch in mehrfacher Weise genutzt. Darüber hinaus wird somit kein zusätzlicher Bauraum für die Leuchtmittel bzw. für eine Leuchteinrichtung benötigt.

Gemäß Anspruch 1 sind die Leuchtmittel in ein innerhalb des Hohlraums oder Zwischenraums vorgesehenes zumindest teiltransparentes oder teiltransluzentes Füllmaterial eingebettet. Bevorzugt ist das Füllmaterial transparent oder transluzent.

Das Füllmaterial füllt den Hohlraum oder Zwischenraum bei einer Ausführungsform nur teilweise aus. Auf diese Weise sind zum einen die Leuchtmittel zusätzlich geschützt und zum anderen unterschiedliche Federcharakteristiken bereitgestellt. So wird bei einer Verformung des Dichtungsabschnitts beim Einfedern in den nicht ausgefüllten Bereich eine geringere Federkraft und bei Erreichen des ausgefüllten Bereichs eine höhere Federkraft bereitgestellt. Auf diese Weise wird eine Art Anschlagwirkung erzielt bzw. ein weicher Anschlag bereitgestellt.

Alternativ oder zusätzlich zu einer teilweisen Füllung des Hohlraums mit dem Füllmaterial kann das Füllmaterial leicht verformbar ausgebildet sein. Möglich ist daher auch eine vollständige Ausfüllung mit dem leicht verformbaren Füllmaterial, wobei ein Einfedern des Dichtungsabschnittes durch Verformung des Füllmaterials ermöglicht ist.

Gemäß einer Ausführungsform sind die Leuchtmittel als weiß leuchtende Halbleiterleuchtmittel ausgebildet. Alternativ oder zusätzlich können die Leuchtmittel auch als farbig leuchtende Halbleiterleuchtmittel ausgebildet sein. Eine Kombination aus weiß und farbig leuchtenden Leuchtmitteln kann insbesondere dadurch erreicht werden, dass die Leuchtmittel als RGB-Halbleiterleuchtmittel ausgebildet sind. Auf diese Weise ist vorteilhaft ein besonders breites Anwendungsspektrum ermöglicht.

Gemäß einer weiteren Ausführungsform sind zumindest teilweise zur Lichtemission im Infrarot- und/oder Ultraviolett-Bereich ausgebildete Leuchtmittel vorgesehen, mittels welcher der Dichtungsabschnitt beheizbar ist. Insbesondere ist die Beheizung zur Enteisung vorgesehen. Alternativ oder zusätzlich kann der Dichtungsabschnitt zur Desinfektion beheizbar sein. Auf diese Weise wird vorteilhaft die Funktionalität des Dichtungsprofils noch erweitert. Beispielsweise wäre es denkbar, eine derartige Enteisungsfunktion in einem Fahrzeug vorzusehen und so ein Vereisen, beispielsweise der Fahrzeugtüren eines im Freien stehenden Fahrzeugs, zu verhindern. Weitere denkbare Anwendungen sind im Luftfahrtbereich, wo Vereisungen im Betrieb vorkommen. Beispielsweise können damit Öffnungen im Bereich einer Haut eines Luftfahrzeugs frei von Vereisung gehalten werden. Die Desinfektionsfunktion kann insbesondere im Lebensmittelbereich oder in medizinischen Bereichen, beispielsweise in Reinräumen oder an Öffnungen steriler Geräte, vorgesehen sein.

Gemäß einer weiteren Ausführungsform sind gemeinsam mit den Leuchtmitteln weitere zumindest teilweise von den Dichtungsabschnitt umgebene, insbesondere in dem Hohlraum angeordnete, elektronische Bauteile entlang des Dichtungsprofils vorgesehen. Insbesondere kann es sich dabei um zumindest einen drucksensitiven Schalter, zumindest einen Temperaturfühler, ein kabelloses Datenübertragungselement und/oder einen Mikroprozessor oder dergleichen handeln. Auf diese Weise können zusätzliche Funktionalitäten in eine Dichtung bzw. in ein Dichtungsprofil integriert werden. Beispielsweise kann mittels eines derart integrierten drucksensitiven Schalters ein Einklemmschutz realisiert werden. Weiterhin beispielhaft kann mittels eines derart integrierten Temperaturfühlers eine automatische Enteisungsfunktion vorgesehen werden, welche sich bei Minusgraden im Bereich der jeweiligen Öffnung automatisch aktiviert. Darüber hinaus kann beispielhaft mittels eines derart integrierten kabellosen Datenübertragungselements eine Einstellung bzw. Abstimmung der Leuchtmittel, beispielsweise unterschiedliche Farbeinstellungen, unterschiedliche Beleuchtungszyklen oder dergleichen, übermittelt werden. Ein Mikroprozessor kann beispielsweise zur Verarbeitung von Steuerbefehlen für die Beleuchtung, zur Steuerung von Steuerroutinen oder dergleichen vorgesehen sein.

Gemäß einer Ausführungsform ist eine Kontaktierungseinrichtung zur Kontaktierung der Leuchtmittel vorgesehen, welche einen Anschluss an zumindest einer Stirnseite des Dichtungsprofils aufweist. Alternativ oder zusätzlich können eine oder mehrere seitliche Durchkontaktierungen durch das Dichtungsprofil vorgesehen sein. Auf diese Weise ist vorteilhaft eine einfache Kontaktierung ermöglicht.

Gemäß einer Weiterbildung ist an einer ersten Stirnseite des Dichtungsprofils ein erster Anschluss und an einer zweiten Stirnseite des Dichtungsprofils ein zweiter Anschluss vorgesehen, wobei der erste und zweite Anschluss eine zueinander korrespondierende Ausbildung aufweisen. Beispielsweise kann die korrespondierende Ausbildung einen männlichen und einen weiblichen Stecker aufweisen, sodass mehrere Dichtungsprofile modular zusammengesteckt werden können. Auf diese Weise wird die Anwendbarkeit in verschiedensten Bereichen ermöglicht, ohne dass dazu Spezialanfertigungen nötig sind. Vielmehr handelt es sich um ein sehr flexibel in unterschiedlichen Längen modular zusammenstellbares System.

Gemäß einer Ausführungsform sind die Leuchtmittel mit einem Bussystem gekoppelt und über die Kontaktierungseinrichtung einzeln und/oder in Gruppen ansteuerbar vorgesehen. Vorteilhaft ist auf diese Weise eine externe Steuerung der Leuchtmittel in einer gewünschten Weise ermöglicht.

Die obigen Ausgestaltungen und Weiterbildungen lassen sich, sofern sinnvoll, beliebig miteinander kombinieren. Insbesondere sind sämtliche Ausführungsformen eines Dichtungsprofils auf die Dichtung einer verschließbaren Öffnung unterschiedlichster Art übertragbar.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Schnittansicht eines Dichtungsprofils gemäß einer ersten Ausführungsform;
- Fig. 2: eine Schnittansicht eines Dichtungsprofils gemäß einer zweiten Ausführungsform;
- Fig. 3: eine Schnittansicht eines Dichtungsprofils gemäß einer dritten Ausführungsform;
- Fig. 4: eine Schnittansicht eines Dichtungsprofils gemäß einer vierten Ausführungsform;
- Fig. 5: eine Schnittansicht eines Dichtungsprofils gemäß einer fünften Ausführungsform;
- Fig. 6: eine Schnittansicht eines Dichtungsprofils gemäß einer sechsten Ausführungsform;
- Fig. 7: das Dichtungsprofil gemäß Fig. 6 in einer perspektivischen Ansicht;
- Fig. 8: eine schematische Seitenansicht eines Dichtungsprofils gemäß einer siebten Ausführungsform;
- Fig. 9: eine schematische Schnittansicht einer verschließbaren Öffnung in einem geschlossenen Zustand; und
- Fig. 10: die verschließbare Öffnung gemäß Fig. 9 in einem geöffneten Zustand.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

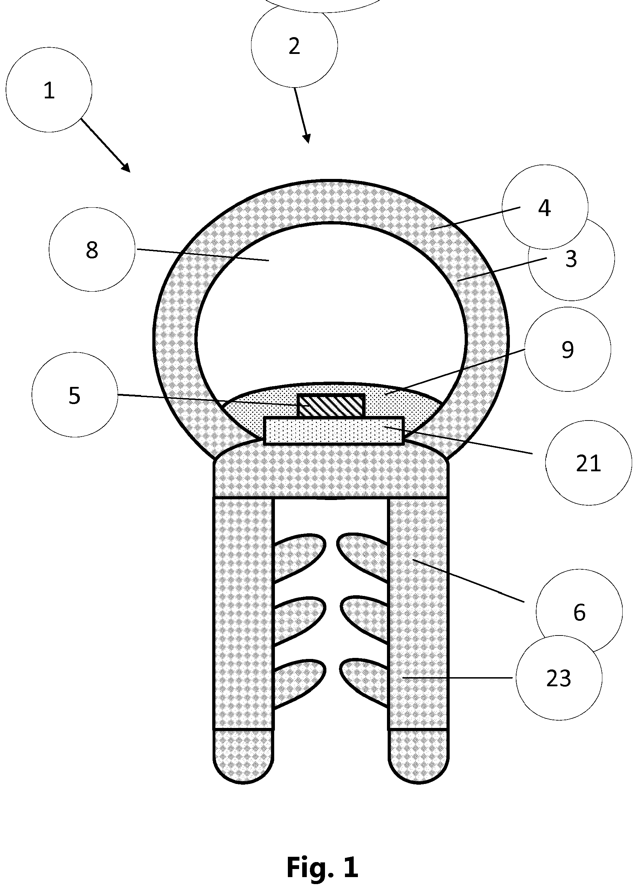

Fig. 1 zeigt eine Schnittansicht eines Dichtungsprofils 1 gemäß einer ersten Ausführungsform.

Das Dichtungsprofil 1 weist einen Dichtungsabschnitt 3 auf, welcher an einer Sichtseite 2 des Dichtungsprofils 1 angeordnet ist. Darüber hinaus ist ein Montageabschnitt 6 vorgesehen, der von der Sichtseite 2 abgewandt angeordnet ist.

In der dargestellten ersten Ausführungsform ist das Dichtungsprofil 1 sowohl im Bereich des Dichtungsabschnitts 3 als auch im Bereich des Montageabschnitts 6 mit einem transparenten elastischen Material gebildet. Der Dichtungsabschnitt 3 bildet somit einen zumindest teiltransparenten Abschnitt 4.

Bei weiteren Ausführungsformen kann auch ein transluzentes elastisches Material vorgesehen sein. In diesem Fall kann der Dichtungsabschnitt 3 auch einen zumindest teiltransluzenten Abschnitt 4 bilden.

Das Dichtungsprofil 1 weist im Bereich des Dichtungsabschnittes 3 einen Hohlraum 8 auf. In dem dargestellten Ausführungsbeispiel ist der Hohlraum 8 rund bzw. oval ausgebildet.

Der Hohlraum 8 ist derart vorgesehen, dass der Dichtungsabschnitt 3 darin einfedern kann. Somit wird eine für die Dichteigenschaften des Dichtungsabschnitts 3 vorteilhafte Nachgiebigkeit bereitgestellt.

Innerhalb des Hohlraums 8 ist ein Leuchtmittel 5 angeordnet. Es handelt sich dabei um ein auf einem quer zum Montageabschnitt 6 ausgerichteten flexiblen Substrat 21 aufgebrachtes Halbleiterleuchtmittel, beispielsweise einen LED Chip.

Das Leuchtmittel 5 ist eingebettet in ein transparentes Füllmaterial 9. Bei weiteren Ausführungsformen kann es sich auch um ein transluzentes Füllmaterial 9 handeln.

Das Füllmaterial 9 füllt den Hohlraum 8 nur teilweise aus, hier in einem dem Montageabschnitt 6 zugewandten Bereich.

Das Füllmaterial 9 ist zum einen vorgesehen, das Leuchtmittel 5 zu schützen, wenn der Dichtungsabschnitt 3 stark verformt wird. Zum anderen stellt es selbst eine gewisse Elastizität bereit, welche gemeinsam mit der flexiblen Ausbildung des Substrats 21 die Flexibilität des Dichtungsprofils 1 erhält. Somit ist das Dichtungsprofil 1 für unterschiedlichste Öffnungen einsetzbar.

Darüber hinaus stellt das Füllmaterial 9 bei starkem Einfedern des Dichtungsabschnittes 3 einen zusätzlichen Widerstand bereit, sodass eine Art sanfter Anschlag gebildet ist.

Der Montageabschnitt 6 ist hier rein beispielhaft als Steckmontageabschnitt gebildet und weist dazu einen mit mehreren Haftlippen besetzten Aufsteckfortsatz 23 auf. Beispielsweise kann das Dichtungsprofil so auf eine Leiste bzw. eine Feder im Bereich einer Dichtungsnische aufgesteckt werden.

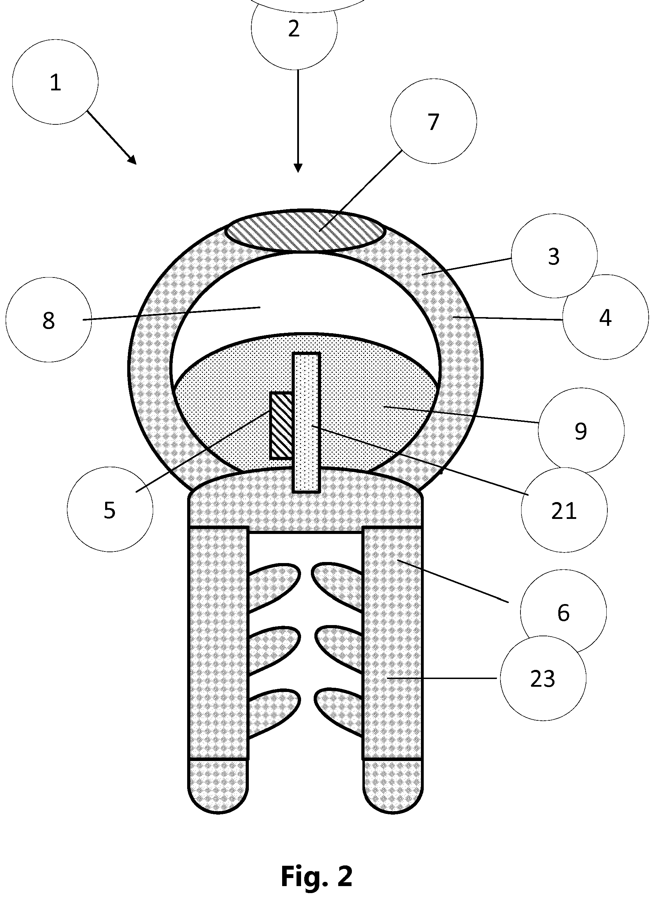

Fig. 2 zeigt eine Schnittansicht eines Dichtungsprofils 1 gemäß einer zweiten Ausführungsform.

Diese unterscheidet sich von der ersten Ausführungsform zum einen dadurch, dass das das Substrat 21 hier in Längsrichtung des Montageabschnittes 6 ausgerichtet ist. Darüber hinaus ist entsprechend mehr Füllmaterial 9 in dem Hohlraum 8 vorgesehen, um die durch die andere Ausrichtung des Substrats 21 größere Höhe mit einzubetten.

Darüber hinaus ist im Unterschied zur ersten Ausführungsform ein optisches Element 7 in Form einer elastischen optischen Linse vorgesehen. Die Linse ist im Querschnitt linsenförmig bzw. oval und erstreckt sich entlang des Dichtungsprofils 1 in Profilrichtung. Beispielsweise kann die Linse aus transparentem Silikon gebildet sein.

Das optische Element 7 dient der gezielten Beeinflussung der Richtung von durch das Leuchtmittel 5 ausgestrahltem Licht, sodass ein vorbestimmter Abstrahlwinkel oder Strahlengang erreicht wird.

Bei der hier gezeigten zweiten Ausführungsform ist durch die Stellung des Substrats 21 bereits eine Richtung des ausgestrahlten Lichts zu der in der dargestellten Schnittzeichnung linken Seite definiert, da die rechte Seite durch das Substrat 21 abgeschattet ist.

Das optische Element 7 ist hier konvex ausgebildet und lenkt das auf das optische Element 7 abgegebene Licht in einer vorbestimmten Richtung ab. Beispielsweise kann so erreicht werden, dass ein Teil des Lichts umgelenkt wird und trotz der Abschattung ein gewisser Lichtkegel schräg zur rechten Seite geht. Dies kann beispielsweise sinnvoll sein, falls die rechte Seite zu einer Stirnseite eines Bereichs zeigt, an welchem eine dass dich Profil 1 aufweisende Dichtung angebracht ist, jedoch schräg zur rechten Seite ein zu beleuchtender Bereich vorgesehen ist.

Bei weiteren Ausführungsformen können selbstverständlich auch andersartige optische Elemente, beispielsweise eine konkave Linse, welche das Licht vollständig auf die linke Seite lenkt vorgesehen sein.

Bei weiteren Ausführungsformen wäre es auch denkbar, ein transparentes Substrat 21 vorzusehen, sodass es zu keiner Abschattung kommt. In diesem Fall würde das Licht zu beiden Seiten abgestrahlt und durch die Linse lediglich eine Abstrahlung nach oben weitgehend vermieden bzw. vermindert.

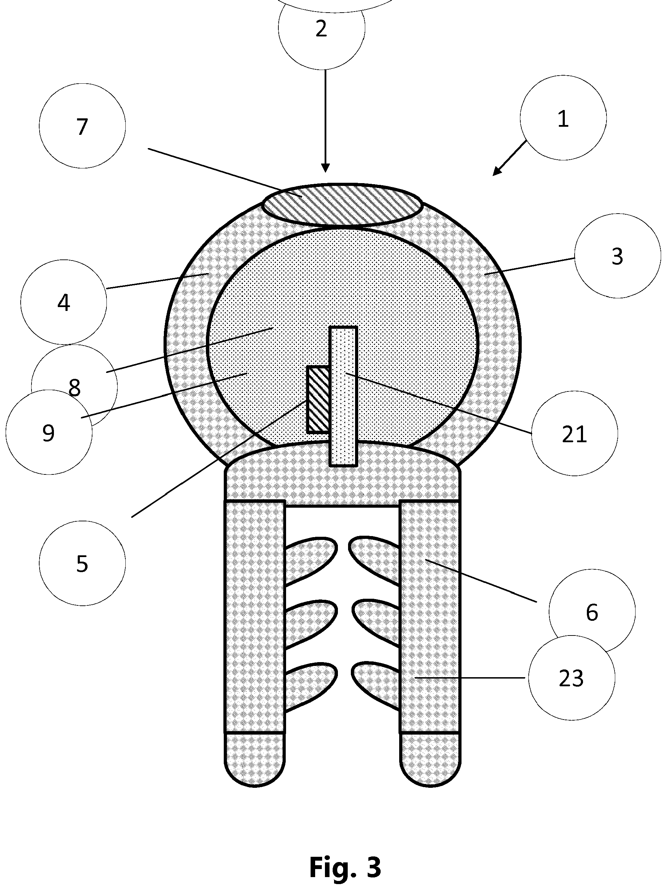

Fig. 3 zeigt eine Schnittansicht eines Dichtungsprofils 1 gemäß einer dritten Ausführungsform.

Diese dritte Ausführungsform unterscheidet sich von der zweiten Ausführungsform dadurch, dass hier der Hohlraum 8 vollständig mit dem Füllmaterial 9 ausgefüllt ist. In diesem Fall bestimmt die Elastizität des Füllmaterials 9 die Nachgiebigkeit bzw. die Elastizität des Dichtungsabschnittes 3. Beispielsweise kann es sich um eine vergleichsweise straffe Dichtung handeln.

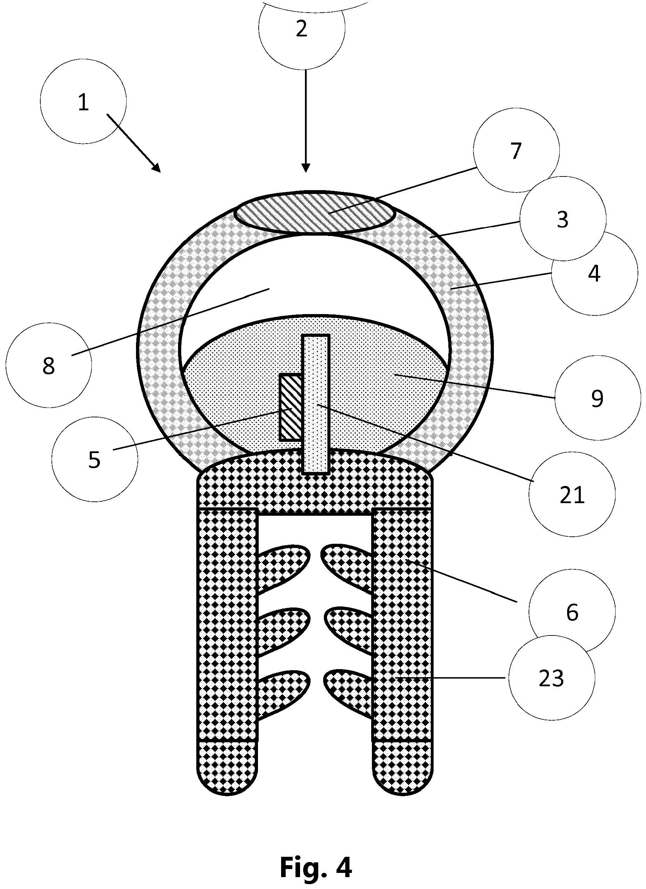

Fig. 4 zeigt eine Schnittansicht eines Dichtungsprofils 1 gemäß einer vierten Ausführungsform.

Diese vierte Ausführungsform basiert auf der zweiten Ausführungsform unterscheidet sich davon dadurch, dass der Montageabschnitt 6 mit einem elastischen Material gebildet ist, welches zu dem zumindest teiltransparenten oder teiltransluzenten Abschnitt 4 unterschiedliche optische Eigenschaften aufweist. Vorliegend handelt es sich um ein intransparentes bzw. intransluzentes elastisches Material. Dieses kann beispielsweise durch Coextrusion gemeinsam mit dem transparenten oder transluzenten Material in einem gemeinsamen Schritt zu dem Dichtungsprofil 1 hergestellt werden und dennoch hinsichtlich seiner Eigenschaften auf die mechanische Montagefunktion hin ohne Rücksicht auf Transparenz über Transluzenz optimiert sein.

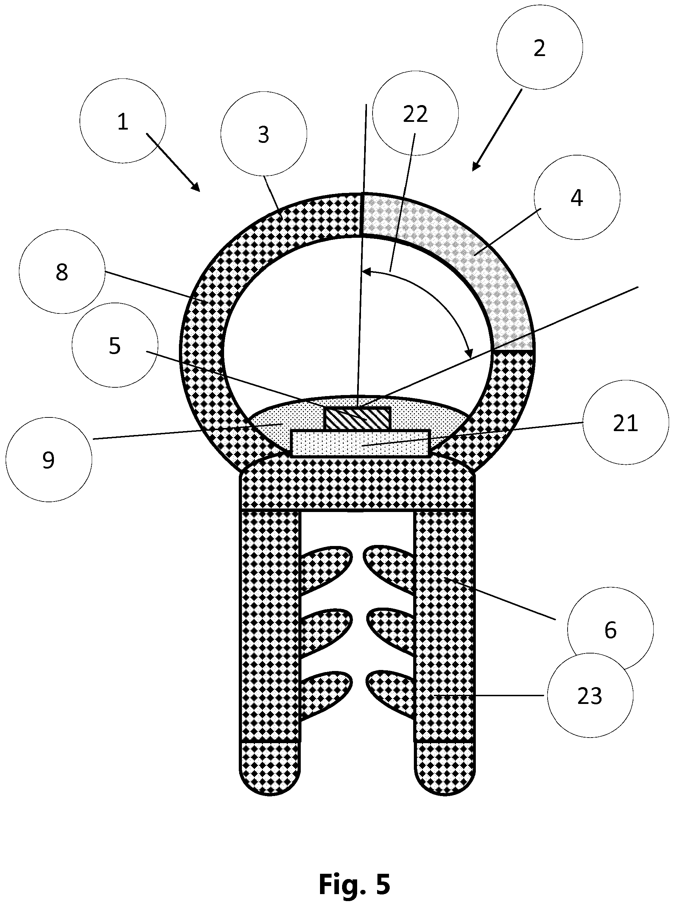

Fig. 5 zeigt eine Schnittansicht eines Dichtungsprofils 1 gemäß einer fünften Ausführungsform.

Hier ist zusätzlich zum Montageabschnitt 6 auch ein Teil des Dichtungsabschnittes 3 mit dem unterschiedliche optische Eigenschaften aufweisenden elastischen Material gebildet.

Der Hohlraum 8, das Leuchtmittel 5 samt Substrat 21 und das Füllmaterial 9 sind hier wieder wie in Bezug auf Fig. 1 bzw. die erste Ausführungsform beschrieben angeordnet.

Der transparente oder transluzente Abschnitt 4 stellt hier lediglich einen (anderen) Teil des Dichtungsabschnittes 3 dar und ist mit dem transparenten oder transluzenten elastischen Material gebildet. Auf diese Weise ist ein definierter Ausstrahlungswinkel 22 vorgesehen, innerhalb welchem durch das Leuchtmittel 5 emittiertes Licht den transparenten oder transluzenten Abschnitt 4 passieren und aus dem Dichtungsprofil 1 austreten kann. In der dargestellten Ausführungsform handelt es sich beispielhaft um einen Ausstrahlungswinkel 22 von etwa 60°.

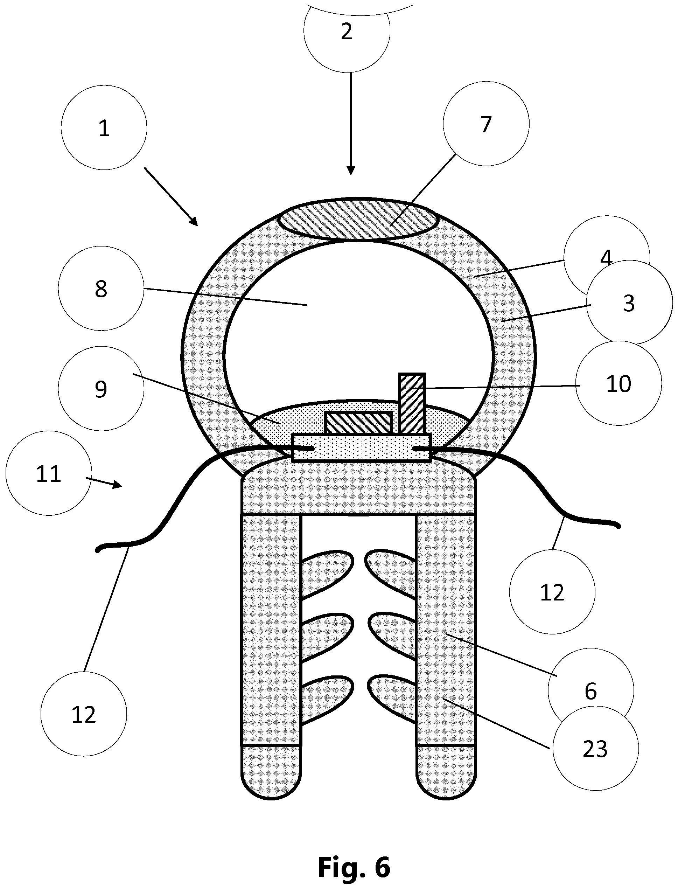

Fig. 6 zeigt eine Schnittansicht eines Dichtungsprofils 1 gemäß einer sechsten Ausführungsform.

Bei dieser Ausführungsform sind der Dichtungsabschnitt 3 und der Montageabschnitt 6 wie in Bezug auf Fig. 1 bzw. die erste Ausführungsform beschrieben ausgebildet. Ferner ist ein optisches Element vorgesehen, wie es in Bezug auf Fig. 2 bzw. die zweite Ausführungsform beschrieben ist.

Im Unterschied zu den vorangehenden Ausführungsformen ist hier zusätzlich zu dem Leuchtmittel 5 ein weiteres elektronisches Bauteil 10 innerhalb des Hohlraums 8 vorgesehen und in das Füllmaterial 9 teilweise mit eingebettet.

Bei dem elektronischen Bauteil 10 handelt es sich gemäß einer Ausführungsform um einen drucksensitiven Schalter, welcher einen auf den Dichtungsabschnitt 3 wirkenden Druck erkennt, sobald ein gewisser Federweg beim Einfedern des Dichtungsabschnittes 3 überschritten wird. Somit kann ein automatisches Ein- und Ausschalten der Leuchtmittel 5 vorgesehen sein, insbesondere ein automatisches Einschalten wenn kein Druck an dem drucksensitiven Schalter anliegt und ein automatisches Ausschalten, wenn, insbesondere durch das Schließen einer Öffnung, ein Druck auf den Schalter aufgebracht wird.

Weitere Anwendungen des drucksensitiven Schalters oder mehrerer drucksensitiver Schalter sind möglich. Beispielhaft kann bei einem automatischen Schließen einer Öffnung auf diese Weise erkannt werden, dass eine sichere Abdichtung vorliegt, sodass das automatische Schließen beendet werden kann. Darüber hinaus kann der drucksensitive Schalter beispielsweise auch als Einklemmschutz dienen und ein automatisches Schließen bei Erkennen eines Gegendrucks automatisch beendet werden.

Bei weiteren Ausführungsformen kann das elektronische Bauteil 10 alternativ oder zusätzlich auch als Temperaturfühler ausgebildet sein. Beispielsweise können die Leuchtmittel 5 zumindest teilweise zum Beheizen der Dichtung eingesetzt werden. Mittels des Temperaturfühlers kann diese Funktion beispielsweise automatisch gestartet werden, wenn im Bereich des Dichtungsprofils 1 durch den Temperaturfühler Temperaturen unterhalb des Gefrierpunkts erkannt werden.

Bei weiteren Ausführungsformen kann das elektronische Bauteil 10 auch kabellose Kommunikationsmittel und/oder einen Mikroprozessor aufweisen. Ferner können auch mehrere elektronische Bauteil 10 vorgesehen sein, insbesondere in regelmäßigen Abständen entlang des Dichtungsprofils 1.

Darüber hinaus ist bei der dargestellten Ausführungsform eine Kontaktierungseinrichtung 11 vorgesehen, welche seitliche Durchkontaktierungen 12 durch das Dichtungsprofil 1 aufweist.

Die Durchkontaktierungen 12 sind als Kabel ausgebildet und mit dem Substrat 21 elektrisch gekoppelt. Daher können über die Durchkontaktierungen 12 die Leuchtmittel 5 und das elektronische Bauteil 10 mit elektrischer Energie versorgt werden.

Darüber hinaus können die Durchkontaktierungen 12 optional oder zusätzlich auch zu Übertragung von Steuerbefehlen, Sensormesswerten oder Schaltsignalen vorgesehen sein.

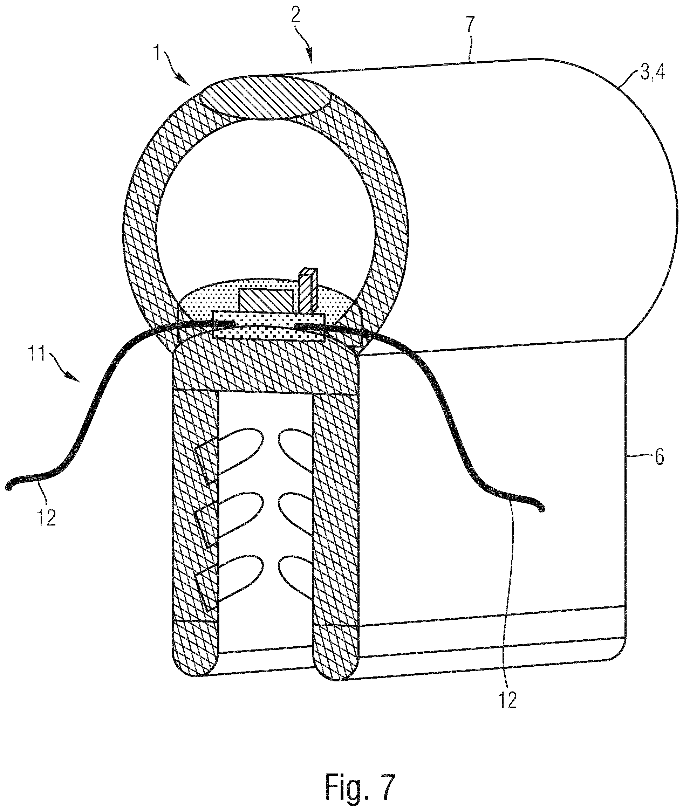

Fig. 7 zeigt das Dichtungsprofil 1 gemäß Fig. 6 in einer perspektivischen Ansicht.

Wie aus der perspektivischen Ansicht erkennbar weist das Dichtungsprofil 1 eine längliche Ausbildung auf. Der hier dargestellte Ausschnitt ist rein beispielhaft bzw. als ein Schnitt durch das Dichtungsprofil zu verstehen. Tatsächlich kann es sich bei dem Dichtungsprofil 1 um ein Modul einer vorbestimmten Länge oder beispielsweise auch um Meterware mit Endloslänge bzw. frei kürzbarer Länge handeln.

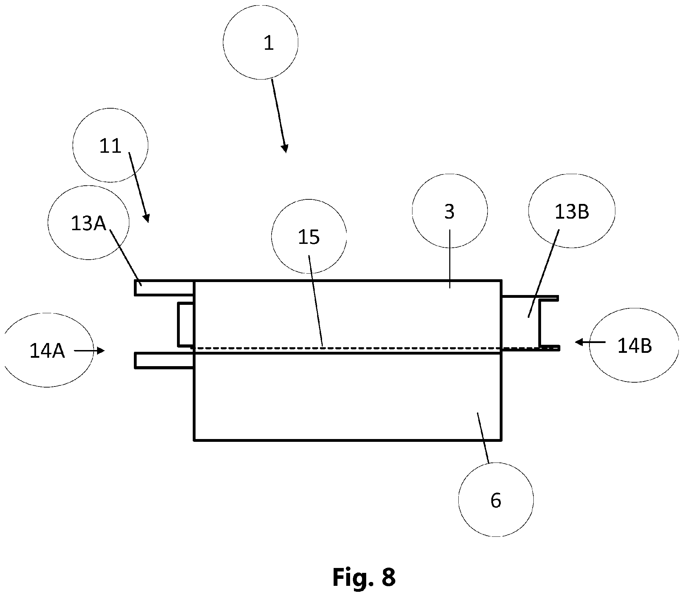

Fig. 8 zeigt eine schematische Seitenansicht eines Dichtungsprofils 1 gemäß einer siebten Ausführungsform.

Im Bereich des Dichtungsabschnittes 3 ist hier eine Kontaktierungseinrichtung 11 in Form von an den Stirnseiten 14A, 14B angeordneten Anschlüssen 13A, 13B vorgesehen.

An einer ersten Stirnseite 14 A ist ein erster Anschluss 13A in Form eines weiblichen Steckers ausgebildet. An einer zweiten Stirnseite 14B ist ein zweiter Anschluss 13B in Form eines männlichen Steckers ausgebildet.

Es handelt sich bei dem Dichtungsprofil 1 somit um ein Modul, wobei eine Reihe derartiger Module gebildet werden kann. Auf diese Weise kann eine Dichtung aus verschiedenen derartigen Modulen bedarfsgerecht zusammengestellt werden.

Die hier nicht dargestellten von dem Dichtungsabschnitt umgebenen Leuchtmittel 5 sind dabei über ein Bussystem 15 untereinander und mit den Anschlüssen 13A, 13B gekoppelt. Auf diese Weise sind die Leuchtmittel 5 einzeln oder in Gruppen über das Bussystem 15 ansteuerbar. Ebenso können, sofern vorhanden, elektronische Bauteile 10 über das Bussystem 15untereinander oder nach außen kommunizieren, beispielsweise mit einer nicht dargestellten (externen) Steuervorrichtung.

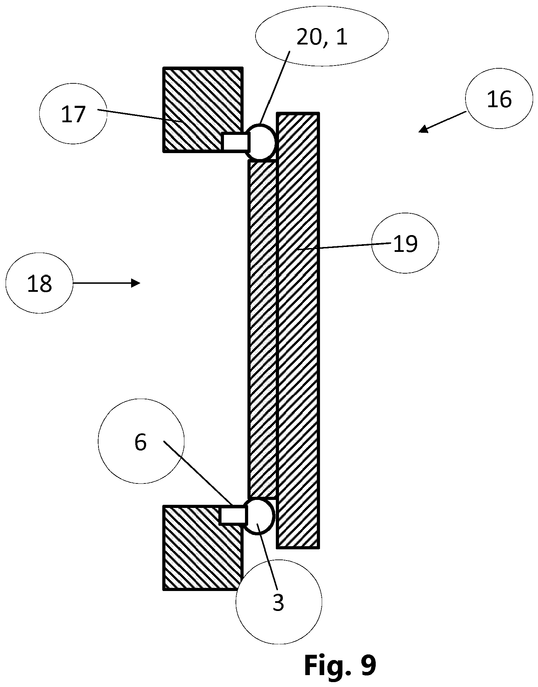

Fig. 9 zeigt eine schematische Schnittansicht einer verschließbaren Öffnung 16 in einem geschlossenen Zustand.

Bei der verschließbaren Öffnung 16 handelt es sich beispielsweise um eine Türe, ein Fenster oder eine Luke. Derartige Öffnungen sind beispielsweise in Gebäuden, Fahrzeugen, Möbeln, Geräten oder Maschinen vorgesehen. Weitere Anwendungen sind möglich.

Die verschließbare Öffnung 16 weist einen ersten Bereich 17 auf, in welchem eine Ausnehmung 18 vorgesehen ist. Beispielsweise kann es sich im Fall einer Türe eines Gebäudes bei dem ersten Bereich 17 um eine Wand handeln und bei der Ausnehmung 18 um eine in der Wand vorgesehene Türzarge.

Ferner ist ein zweiter Bereich 19 vorgesehen, der zum Verschließen der Öffnung 18 ausgebildet ist. Im Fall einer Türe eines Gebäudes handelt es sich bei dem zweiten Bereich 19 um ein Türblatt.

Zwischen dem ersten Bereich 17 und dem zweiten Bereich 19 ist eine um die Ausnehmung 18 zumindest teilweise umlaufende Dichtung 20 angeordnet. Diese ist mit einem Dichtungsprofil 1 gemäß einer der vorstehend beschriebenen Ausführungsformen gemäß Fig. 1 bis 8 ausgebildet und vorgesehen, um die beiden Bereiche 17, 19 gegeneinander abzudichten.

Das Dichtungsprofil 1 der Dichtung 20 ist hier beispielhaft mit dem Montagebereich 6 in einem an die Ausnehmung 18 angrenzenden Abschnitt des ersten Bereichs 17 befestigt. Die Sichtseite 2 ist zu dem zweiten Bereich 19 gerichtet.

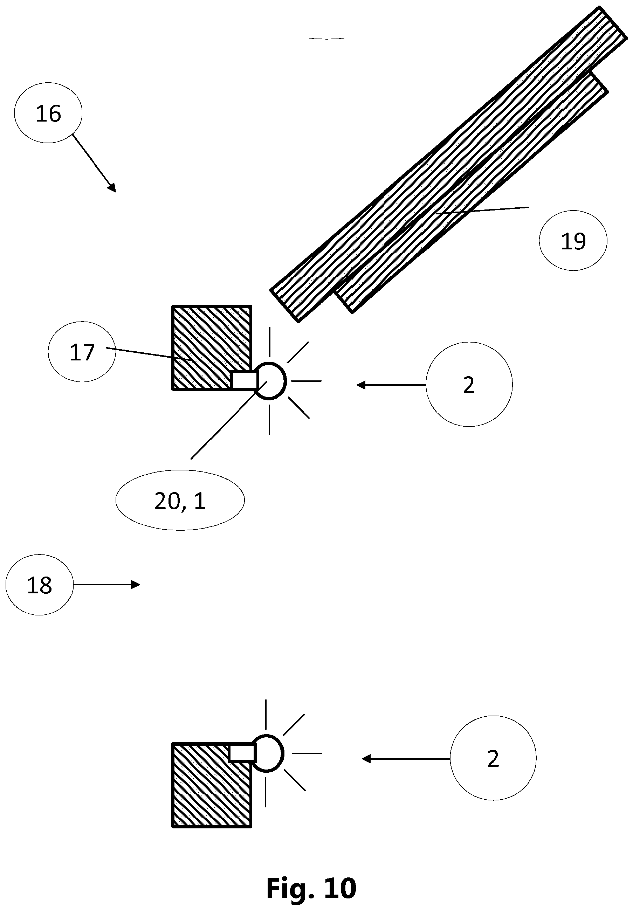

Fig. 10 zeigt die verschließbare Öffnung 16 gemäß Fig. 9 in einem geöffneten Zustand.

In dem geöffneten Zustand ist der zweite Bereich 19 von dem ersten Bereich 17 entfernt. Bei einer Türe kann es sich bei dem geöffneten zustand beispielsweise um einen verschwenkten Zustand des zweiten Bereichs 19 gegenüber dem ersten Bereich 17 um eine Achse von hier nicht dargestellten Türscharnieren handeln.

Im geöffneten Zustand der verschließbaren Öffnung 16 liegt eine Sichtseite 2 des Dichtprofils 1 von außen sichtbar frei. Somit kann die in die Dichtung integrierte Beleuchtungsfunktion des Dichtprofils 1 eine von außen sichtbare Beleuchtung, beispielsweise zur Raumbeleuchtung oder Ambiente Beleuchtung, bereitstellen, wie in Fig. 10 mit die Sichtseite umgebenden Strichen angedeutet.

Darüber hinaus kann auch eine in die Dichtung integrierte die Signalfunktion zur Anzeige der Position der Öffnung z. B bei Rauchentwicklung oder bei Dunkelheit, vorgesehen sein. Dabei können die Leuchtmittel 5 dauerhaft leuchten oder blinken.

Bei den Leuchtmitteln 5 des Dichtprofils 1 der Dichtung 20 handelt es sich vorzugsweise um RGB-Halbleiterleuchtmittel. Daher kann die Lichtfarbe entsprechend der jeweiligen Anwendung angepasst werden. Beispielsweise kann im Notfall ein Notausgang mit grüner Farbe signalisiert werden und im Normalbetrieb eine Beleuchtung mit weißer Lichtfarbe vorgesehen sein.

Weiterhin können die Leuchtmittel 5 teilweise zur Lichtemission im Infrarot- und/oder Ultraviolett-Bereich ausgebildet sein, sodass der Dichtungsabschnitt 3 mittels der Leuchtmittel beheizbar ist. Die Leuchtmittel können somit zur Enteisung und/oder Desinfektion der Dichtung 20 eingesetzt werden. Die Beheizung kann in dem dargestellten offenen Zustand, aber insbesondere auch bereits in dem geschlossenen Zustand der Öffnung vorgesehen sein.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise sind bei weiteren Ausführungsformen andere Ausbildungen des Hohlraums 8, beispielsweise eckige und/oder längliche Ausbildungen, möglich.

Bei weiteren Ausführungsformen muss das Dichtungsprofil 1 nicht notwendigerweise geschlossen sein. Anstatt eines Hohlraums 8 kann somit auch lediglich ein (beispielsweise zu einer Seite geöffneter) Zwischenraum des Dichtungsprofils 1 vorgesehen sein.

### Bezugszeichenliste

- 1: Dichtungsprofil
- 2: Sichtseite
- 3: Dichtungsabschnitt
- 4: Abschnitt
- 5: Leuchtmittel
- 6: Montageabschnitt
- 7: optisches Element
- 8: Hohlraum
- 9: Füllmaterial
- 10: elektronisches Bauteil
- 11: Kontaktierungseinrichtung
- 12: Durchkontaktierung
- 13A, 13B: Anschluss
- 14A, 14B: Stirnseite
- 15: Bussystem
- 16: verschließbare Öffnung
- 17: erster Bereich
- 18: Ausnehmung
- 19: zweiter Bereich
- 20: Dichtung
- 21: Substrat
- 22: Ausstrahlungswinkel
- 23: Aufsteckfortsatz

## Patentansprüche

1. Dichtungsprofil (1),
mit einer Sichtseite (2),
mit einem Dichtungsabschnitt (3), welcher ein elastisches Material aufweist und zumindest teilweise an der Sichtseite (2) vorgesehen ist,
mit einem zumindest teiltransparenten oder teiltransluzenten Abschnitt (4), der zumindest teilweise an der Sichtseite (2) vorgesehen ist und
mit einem Leuchtmittel (5), welches zumindest teilweise von dem Dichtungsabschnitt (3) umgeben und derart angeordnet ist, dass davon ausgesendetes Licht an der Sichtseite (2) den zumindest teiltransparenten oder teiltransluzenten Abschnitt (4) nach außen passiert,
wobei das elastische Material eine zumindest teiltransparente oder teiltransluzente Ausbildung aufweist und wobei der zumindest teiltransparente oder teiltransluzente Abschnitt (4) einteilig mit dem Dichtungsabschnitt (3) ausgebildet ist, **gekennzeichnet dadurch, daß** eine Vielzahl entlang des Dichtungsprofils (1) angeordneter Leuchtmittel (5) vorgesehen ist, insbesondere eine Vielzahl von auf einem sich in Profilrichtung erstreckenden flexiblen Substrat aufgebrachter Halbleiterleuchtmittel, wobei eine Profilform des Dichtungsprofils (1) einen Hohlraum oder Zwischenraum (8) vorsieht, welcher ein Einfedern des Dichtungsabschnittes (3) erlaubt, wobei die Leuchtmittel (5) in dem Hohlraum oder Zwischenraum (8) angeordnet sind, und
wobei die Leuchtmittel (5) in ein innerhalb des Hohlraums oder Zwischenraums (8) vorgesehenes zumindest teiltransparentes oder teiltransluzentes Füllmaterial (9) eingebettet sind, welches den Hohlraum oder Zwischenraum (8) nur teilweise ausfüllt und/oder welches leicht verformbar ausgebildet ist.

2. Dichtungsprofil nach einem der vorangehenden Ansprüche,
**dadurch gekennzeichnet,**
**dass** ein von der Sichtseite (2) abgewandter Montageabschnitt (6) vorgesehen ist, welcher ebenfalls mit dem elastischen Material, insbesondere einteilig mit dem Dichtungsabschnitt (3), gebildet ist.

3. Dichtungsprofil nach einem der vorangehenden Ansprüche,
**dadurch gekennzeichnet,**
**dass** in dem zumindest teiltransparenten oder teiltransluzenten Abschnitt (4) ein optisches Element (7), insbesondere eine elastische optische Linse, vorgesehen ist, welches zu einer in einer vorbestimmten Weise gerichteten Lichtausstrahlung von dem zumindest teiltransparenten oder teiltransluzenten Abschnitt (4) ausgebildet ist.

4. Dichtungsprofil nach einem der vorangehenden Ansprüche,
**dadurch gekennzeichnet,**
**dass** die Leuchtmittel (5) als weiß und /oder farbig leuchtende Halbleiterleuchtmittel ausgebildet sind, insbesondere als RGB-Halbleiterleuchtmittel.

5. Dichtungsprofil nach einem der vorangehenden Ansprüche,
**dadurch gekennzeichnet,**
**dass** zumindest teilweise zur Lichtemission im Infrarot- und/oder Ultraviolett-Bereich ausgebildete Leuchtmittel (5) vorgesehen sind, mittels welcher der Dichtungsabschnitt (3) beheizbar ist.

6. Dichtungsprofil nach einem der vorangehenden Ansprüche,
**dadurch gekennzeichnet,**
**dass** gemeinsam mit den Leuchtmitteln (5) weitere zumindest teilweise von den Dichtungsabschnitt (3) umgebene, insbesondere in dem Hohlraum (8) angeordnete, elektronische Bauteile (10) entlang des Dichtungsprofils vorgesehen sind, insbesondere zumindest ein drucksensitiver Schalter, zumindest ein Temperaturfühler, ein kabelloses Datenübertragungselement und/oder ein Mikroprozessor.

7. Dichtungsprofil nach einem der vorangehenden Ansprüche,
**dadurch gekennzeichnet,**
**dass** eine Kontaktierungseinrichtung (11) zur Kontaktierung der Leuchtmittel (5) vorgesehen ist, welche einen Anschluss (13A; 13B) an zumindest einer Stirnseite (14A; 14B) des Dichtungsprofils (1) oder eine oder mehrere seitliche Durchkontaktierungen (12) durch das Dichtungsprofil (1) aufweist.

8. Dichtungsprofil nach Anspruch 7,
**dadurch gekennzeichnet,**
**dass** an einer ersten Stirnseite (14A) des Dichtungsprofils (1) ein erster Anschluss (13A) und an einer zweiten Stirnseite (14B) des Dichtungsprofils (1) ein zweiter Anschluss (14B) vorgesehen ist, wobei der erste und zweite Anschluss (14A, 14B) eine zueinander korrespondierende Ausbildung aufweisen.

9. Dichtungsprofil nach Anspruch 7 oder 8,
**dadurch gekennzeichnet,**
**dass** die Leuchtmittel (5) mit einem Bussystem (15) gekoppelt sind und über die Kontaktierungseinrichtung (11) einzeln und/oder in Gruppen ansteuerbar vorgesehen sind.

10. Verschließbare Öffnung (16), insbesondere Türe, Fenster oder Luke, insbesondere für ein oder in einem Gebäude, Fahrzeug, Möbel oder Gerät oder für eine oder in einer Maschine, mit einem ersten Bereich (17), der eine Ausnehmung (18) aufweist,
mit einem zweiten Bereich (19), der zum reversiblen Öffnen und Verschließen der Ausnehmung (18) ausgebildet ist,
mit einer zwischen dem ersten Bereich (17) und dem zweiten Bereich (19) angeordneten Dichtung (20), welche ein Dichtungsprofil (1) gemäß einem der vorangehenden Ansprüche aufweist und vorgesehen ist, in einem geschlossenen Zustand Öffnung (16) eine Dichtwirkung zwischen dem ersten Abschnitt (17) und dem zweiten Abschnitt (19) bereitzustellen und in einem geöffneten Zustand der Öffnung (16) einen Bereich der Ausnehmung (18), insbesondere situationsangepasst, zu beleuchten oder zu signalisieren.

## Claims

1. Seal profile (1),
having a visible face (2),
having a seal portion (3) having a resilient material and provided at least in part on the visible face (2),
having an at least partially transparent or partially translucent portion (4) provided at least in part on the visible face (2), and
having a light source (5) enclosed at least in part by the seal portion (3) and arranged in such a way that light emitted thereby at the visible face (2) passes to the outside through the at least partially transparent or partially translucent portion (4),
the resilient material having an at least partially transparent or partially translucent formation, and the at least partially transparent or partially translucent portion (4) being formed in a single piece with the seal portion (3), **characterised in that**
a plurality of light sources (5) arranged along the seal profile (1) are provided, in particular a plurality of semiconductor light sources attached to a flexible substrate extending in the profile direction, a profile shape of the seal profile (1) providing a cavity or gap (8) which makes it possible to compress the seal portion (3), the light sources (5) being arranged in the cavity or gap (8), and
the light sources (5) being embedded in an at least partially transparent or partially translucent filler material (9), which is provided within the cavity or gap (8) and which fills up the cavity or gap (8) only in part and/or is formed slightly deformable.

2. Seal profile according to any of the preceding claims,
**characterised**
**in that** a mounting portion (6) remote from the visible face (2) is provided, and is also formed using the resilient material, in particular in a single piece with the seal portion (3).

3. Seal profile according to any of the preceding claims,
**characterised**
**in that** an optical element (7), in particular a resilient optical lens, is provided in the at least partially transparent or partially translucent portion (4), and is formed for light emission, directed in a predetermined manner, from the at least partially transparent or partially translucent portion (4).

4. Seal profile according to any of the preceding claims,
**characterised**
**in that** the light sources (5) are formed as white-emitting and/or colour-emitting semiconductor light sources, in particular as RGB semiconductor light sources.

5. Seal profile according to any of the preceding claims,
**characterised**
**in that** light sources (5) are provided which are formed to emit light in the infrared and/or ultraviolet range at least in part and by means of which the seal portion (3) can be heated.

6. Seal profile according to any of the preceding claims,
**characterised**
**in that**, together with the light sources (5), further electronic components (10), enclosed at least in part by the seal portion (3) and in particular arranged in the cavity (8), are provided along the seal profile, in particular at least one pressure-sensitive switch, at least one temperature sensor, a wireless data transmission element and/or a microprocessor.

7. Seal profile according to any of the preceding claims,
**characterised**
**in that** a contacting device (11) for contacting the light source (5) is provided, and has a terminal (13A; 13B) on at least one end face (14A; 14B) of the seal profile (1) or one or more lateral through-contacts (12) through the seal profile (1) .

8. Seal profile according to claim 7,
**characterised**
**in that** a first terminal (13A) is provided on a first end face (14A) of the seal profile (1) and a second terminal (13B) is provided on a second end face (14B) of the seal profile (1), the first and second terminal (13A, 13B) having a mutually corresponding formation.

9. Seal profile according to either claim 7 or claim 8,
**characterised**
**in that** the light sources (5) are coupled to a bus system (15) and provided so as to be actuable individually and/or in groups via the contacting device (11).

10. Sealable opening (16), in particular a door, window or hatch, in particular for or in a building, vehicle, piece of furniture or appliance or for or in a machine,
having a first region (17) having a clearance (18),
having a second region (19) formed for reversibly opening and sealing the clearance (18),
having a seal (20), which is arranged between the first region (17) and the second region (19), has a seal profile (1) according to any of the preceding claims, and is provided to bring about a sealing effect between the first portion (17) and the second portion (19) in a closed state of the opening (16) and to illuminate or signal a region of the clearance (18), in particular in a manner adapted to the situation, in an open state of the opening (16).

## Revendications

1. Profilé d'étanchéité (1),
comportant une face visible (2),
comportant une section d'étanchéité (3) qui présente un matériau élastique et est prévue au moins partiellement sur la face visible (2),
comportant une section au moins partiellement transparente ou partiellement translucide (4) qui est prévue au moins partiellement sur la face visible (2) et
comportant un moyen lumineux (5) qui est au moins partiellement entouré par la section d'étanchéité (3) et est disposé de telle sorte que la lumière émise par celui-ci sur la face visible (2) traverse la section au moins partiellement transparente ou partiellement translucide (4) vers l'extérieur,
dans lequel le matériau élastique présente une conception au moins partiellement transparente ou partiellement translucide et dans lequel la section au moins partiellement transparente ou partiellement translucide (4) est formée d'une seule pièce avec la section d'étanchéité (3),
**caractérisé en ce**
**qu'**une pluralité de moyens lumineux (5) disposés le long du profilé d'étanchéité (1) est prévue, en particulier une pluralité de moyens lumineux à semi-conducteurs appliqués sur un substrat flexible s'étendant dans la direction du profilé, une forme de profilé du profilé d'étanchéité (1) prévoyant une cavité ou un espace intermédiaire (8) qui permet une compression de la section d'étanchéité (3), les moyens lumineux (5) étant disposés dans la cavité ou l'espace intermédiaire (8), et
dans lequel les moyens d'éclairage (5) sont incorporés dans un matériau de remplissage (9) au moins partiellement transparent ou partiellement translucide qui est prévu à l'intérieur de la cavité ou de l'espace intermédiaire (8) et qui ne remplit que partiellement la cavité ou l'espace intermédiaire (8) et/ou qui est conçu légèrement déformable.

2. Profilé d'étanchéité selon l'une des revendications précédentes,
**caractérisé en ce**
**qu'**il est prévu une section de montage (6) qui est tournée à l'opposé de la face visible (2) et qui est également formée avec le matériau élastique, en particulier d'une seule pièce avec la section d'étanchéité (3).

3. Profilé d'étanchéité selon l'une des revendications précédentes,
**caractérisé en ce**
**qu'**un élément optique (7), en particulier une lentille optique élastique, est prévu dans la section au moins partiellement transparente ou partiellement translucide (4), lequel est conçu pour une émission de lumière orientée d'une manière prédéterminée par la section au moins partiellement transparente ou partiellement translucide (4).

4. Profilé d'étanchéité selon l'une des revendications précédentes,
**caractérisé en ce**
**que** les moyens d'éclairage (5) sont conçus comme des moyens d'éclairage à semi-conducteurs lumineux blancs et/ou colorés, en particulier comme des moyens d'éclairage à semi-conducteurs RGB.

5. Profilé d'étanchéité selon l'une des revendications précédentes,
**caractérisé en ce**
**que** des moyens d'éclairage (5) conçus au moins partiellement pour une émission de lumière dans le domaine infrarouge et/ou ultraviolet sont prévus, au moyen desquels la section d'étanchéité (3) peut être chauffée.

6. Profilé d'étanchéité selon l'une des revendications précédentes,
**caractérisé en ce**
**qu'**il est prévu le long du profilé d'étanchéité, conjointement avec les moyens d'éclairage (5), d'autres composants électroniques (10) entourés au moins partiellement par la section d'étanchéité (3) et disposés en particulier dans la cavité (8), en particulier au moins un commutateur sensible à la pression, au moins un capteur de température, un élément de transmission de données sans fil et/ou un microprocesseur.

7. Profilé d'étanchéité selon l'une des revendications précédentes,
**caractérisé en ce**
**qu'**il est prévu un dispositif de mise en contact (11) pour la mise en contact des moyens d'éclairage (5), lequel présente une connexion (13A ; 13B) sur au moins une face frontale (14A ; 14B) du profilé d'étanchéité (1) ou un ou plusieurs contacts traversants latéraux (12) à travers le profilé d'étanchéité (1).

8. Profilé d'étanchéité selon la revendication 7,
**caractérisé en ce**
**qu'**une première connexion (13A) est prévue sur une première face frontale (14A) du profilé d'étanchéité (1) et une deuxième connexion (13B) sur une deuxième face frontale (14B) du profilé d'étanchéité (1), les première et deuxième connexions (13A, 13B) présentant une conception mutuellement correspondante.

9. Profilé d'étanchéité selon la revendication 7 ou 8,
**caractérisé en ce**
**que** les moyens lumineux (5) sont couplés à un système de bus (15) et sont prévus de manière à pouvoir être commandés individuellement et/ou en groupe par le dispositif de mise en contact (11).

10. Ouverture pouvant être fermée (16), en particulier porte, fenêtre ou trappe, en particulier pour ou dans un bâtiment, un véhicule, un meuble ou un appareil ou pour ou dans une machine,
comportant une première zone (17) qui présente un évidement (18),
comportant une deuxième zone (19) qui est conçue pour ouvrir et fermer de manière réversible l'évidement (18), comportant un joint d'étanchéité (20) disposé entre la première zone (17) et la deuxième zone (19), lequel présente un profilé d'étanchéité (1) selon l'une des revendications précédentes et est prévu, dans un état fermé de l'ouverture (16), pour fournir un effet d'étanchéité entre la première section (17) et la deuxième section (19) et, dans un état ouvert de l'ouverture (16), pour éclairer ou signaler une zone de l'évidement (18), en particulier de manière adaptée à la situation.
